# EUROPEAN PATENT SPECIFICATION

(11) **EP 1 013 478 B1**
(45) Date of publication and mention of the grant of the patent: **07.06.2006**
(21) Application number: 99310172.4
(22) Date of filing: 17.12.1999
(51) Int. Cl.: B60C 9/14, B60C 9/18, B60C 13/00

(54) **Pneumatic vehicle tyre**
Fahrzeugluftreifen
Bandage pneumatique pour véhicule

(30) Priority: 21.12.1998 DE 19859157
(43) Date of publication of application: 28.06.2000
(73) Proprietor: Dunlop GmbH & Co. KG, 63450 Hanau (DE)
(72) Inventor: Durschang, Gerold, 63825 Schöllkrippen (DE)
(74) Representative: Kutsch, Bernd

(56) References cited:
- EP-A- 0 509 295
- EP-A- 0 515 226
- EP-A- 0 703 102
- EP-A- 0 844 110
- EP-A- 0 928 704
- GB-A- 1 507 451
- GB-A- 1 549 997
- US-A- 5 820 711

## Description

The invention relates to a pneumatic vehicle tyre comprising a tread region having a belt and also side walls extending between the tread region and the bead regions, wherein at least two carcass plies are provided, the ends of which are guided around axially spaced apart bead cores.

In the construction of pneumatic vehicle tyres, particularly of radial tyres, attention must be paid to the fact that the carcass plies are protected as well as possible against damage, such as can in particular occur when driving over kerbs. This can, for example, be provided for by increasing the thickness of the sidewall, however, this in turn leads to a possibly undesired increase of the stiffness in the sidewall region and also to a disturbing increase in weight. Accordingly, in the design of a pneumatic vehicle tyre compromises must namely be made which then take the best possible account of the many existing and frequently contradictory requirements.

The object of the present invention is to improve the driving characteristics of a tyre, in particular by more stability, and to increase the safety against damage to the carcass.

EP-A-0844 110 discloses a pneumatic runflat tyre comprising at least 3 radial carcass plies wherein the tread portion is provided with a crown reinforcing rubber layer between two carcass plies and wherein a side reinforcing rubber layer is provided between the axially innermost carcass ply and axially outer next carcass ply.

According to the present invention a pneumatic vehicle tyre comprises a tread region having a belt and also side walls extending between the tread region and the bead regions, wherein at least two carcass plies are provided, the ends of which are guided around axially spaced apart bead cores, characterised in that at least one buffering intermediate ply is provided between at least two carcass plies in predeterminable zones and determines the mutual spacing between these carcass plies.

By means of the intermediate buffer ply of the invention, a resilient layer is, on the one hand, provided between the carcass plies which enables a certain relative movement between the carcass plies and, on the other hand, the buffering intermediate ply permits the mutual spacing of the two carcass plies to be pre-set in a defined manner and also differently pre-set over the width of the tyre, which amounts to the same thing as the corresponding pre-setting of the section modulus. In the region of the sidewalls the stiffness can thus be intentionally pre-set or increased, which leads to an improvement in the handling. Moreover, an improvement of the shock resistance can be achieved in the tread region.

The mentioned shock resistance is checked in the context of an impact or shock test in which a rounded plunger is pressed into the tread of the tyre until the tread surface is punctured. With this test, the resistance of the tyre against local mechanical peak loading is determined. This plunger test is prescribed in the USA.

The higher stiffness or stability of the carcass construction of the invention is based on the fact that the carcass is constructed in the manner of a double-T beam, with the intermediate layer corresponding to the vertical web of the double-T beam and the two carcass plies can be equated to the transverse chords of the double-T beam. The determining factor for the section modulus of this design is the mutual spacing of the chords of the double-T beam, i.e. of the carcass plies, so that through the selection of the thickness of the buffering intermediate ply, the respectively desired section modulus can be pre-set or influenced in the respective tyre region.

An intentional increase of the stiffness is possible, in particular in the region of the tyre sidewalls and, moreover, the buffering intermediate ply ensures that the safety against damage to the carcass plies can be substantially reduced in the critical case of driving over kerbs. This is a consequence of the fact that stiffness and spring action can be ideally combined and the restricted relative movability between the carcass plies ensured by the resilient layer ensures that these carcass plies are less susceptible to damage.

A further advantage of the carcass concept of the invention lies in the fact that the above mentioned improvements of the tyre can be achieved without substantially increasing the total weight of the tyre.

For the manufacture of tyres in accordance with the invention it is of particular significance that the buffering intermediate plies can be respectively mounted in the context of a preshaping step in an accurate position on the corresponding carcass ply, so that no additional time requirement arises from a technical manufacturing viewpoint during the tyre building itself.

Preferred embodiments of the invention are set forth in the subordinate claims, in the description and also in the drawing.

The invention will now be described in the following by way of example and with reference to the drawing. There are shown:
- Fig. 1: a cross-sectional view of a motor vehicle tyre in accordance with an embodiment of the invention, and
- Fig. 2: a carcass assembly analogous to Fig. 1 in accordance with a further embodiment of the invention in a drawn-apart representation.

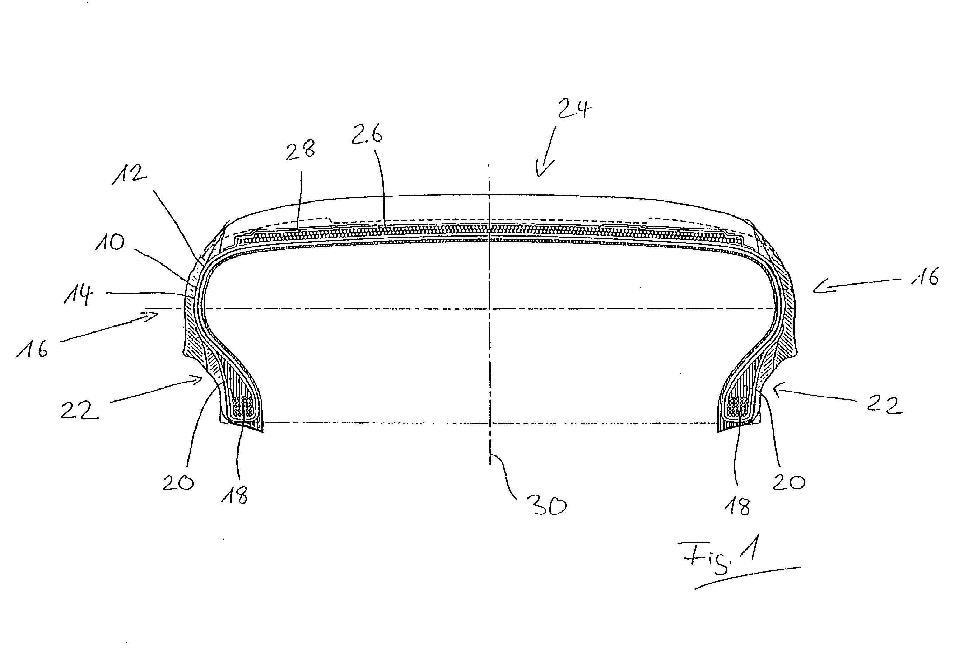

The radial tyre of the invention shown in Fig. 1 comprises a two-ply carcass, the two plies 12, 14 of which respectively extend between the two bead regions 22 of the tyre along the tyre sidewalls 16 and along the tread region 24.

A two-ply belt 26 is provided in the tread region 24 radially outside of the carcass 12, 14 and is surrounded by a cover 28 in the form of a ring bandage.

The bead regions 22 of the tyre each include a bead core 18 and a radially outwardly tapering bead apex 20. The two carcass plies 12, 14 extend along the axial inner side of the bead apex 20 and the bead cores 18 and are turned around the bead cores 18 in the axial direction from the inside to the outside.

The free ends of the outer carcass ply 12 end in each case fractionally above the bead cores 18, whereas the free ends of the inner carcass ply 14 respectively extend up to and into the sidewalls 16 of the tyre and contact the outer carcass ply 12 above the bead apex 20.

A buffering intermediate ply 10 is arranged between the two carcass plies 12, 14 and its width is selected in such a way that it respectively terminates in the bead regions 22 before the bead cores 18 approximately at the level of the end of the outer carcass ply 12, which is turned around the bead core 18. The intermediate ply 10 can also terminate in the region of the bead apexes 20, for example in the region of their radially outer ends, or in the region of the radially inner half of the height of the sidewall 16.

In accordance with the embodiment of Fig. 1, the thickness of the intermediate ply 10 is approximately constant in the region of the sidewalls 16 and in the bead regions 22, whereas it reduces in the tread region 24, in each case in the direction of the central plane 30 of the tyre.

In the preferred embodiment of the invention, the thickness of the intermediate ply 10 is constant over its entire width and amounts to , for example, about 0.6 mm. The preferred material for the intermediate ply 10 is rubber.

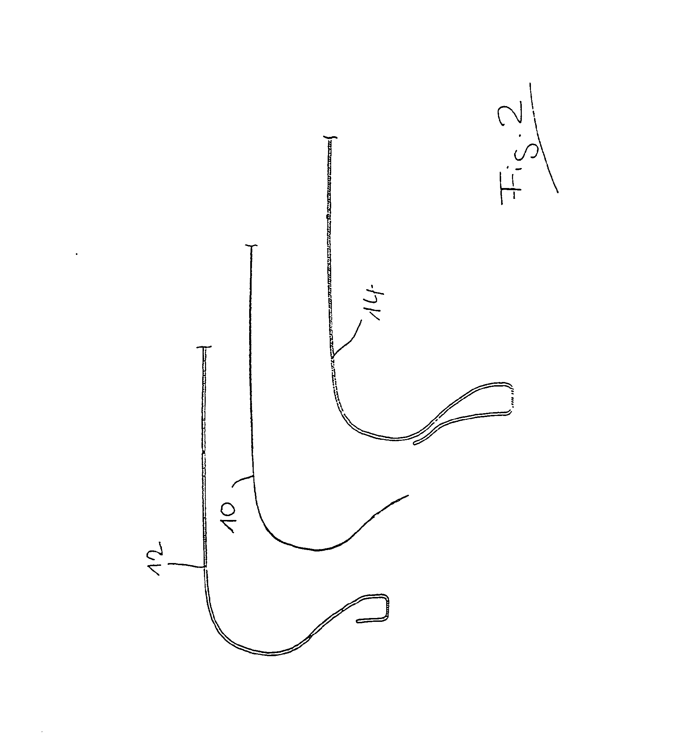

The Fig. 2, in which two carcass plies 12, 14 and a buffering intermediate ply 10 are shown, shows an alternative of an intermediate ply 10 in accordance with the invention. It can be seen that the thickness of the intermediate ply 10 is approximately constant in the central section of the tread region 24 and gradually reduces in the direction of its free ends, with the reduction already setting in before the tyre shoulders.

The maximum thickness of the intermediate ply 10 of the invention can amount to up to 2 mm, it preferably lies in the range from 0.5 to 1 mm.

Instead of rubber, a composite material of rubber and textile material can also be provided for the intermediate ply 10. The intermediate ply 10 can also be manufactured of plastic material, for example of nylon or Kevlar.

In two preferred embodiments of the invention, the intermediate ply 10 is formed such that its modulus of elasticity E* amounts to 6.7 and 11.5 MPa respectively, its Shore-A-hardness amounts to 59 and 71 respectively, and also the Tgδ amounts to 0.128 and 0.160 respectively. Other values for these parameters can basically also be selected.

It is also possible to provide a plurality of intermediate plies and to arrange them above one another in the manner of a sandwich construction. The individual plies are in this respect preferably manufactured of the same material and preferably have the same width.

In the event that more than two carcass plies are provided the buffering intermediate ply is provided between the two radially outer carcass plies. An intermediate ply provided in the tread region leads to an increase of the strength of the total assembly in the region of the tread and thus also to an improvement of the shock resistance.

It is of particular advantage that the respective buffering intermediate plies do not first have to be brought into the tyre during the tyre building, but rather that these buffering intermediate plies can already be brought accurately into position on the respective carcass ply in a preshaping step, so that no form of additional effort results during the tyre building.

## Claims

1. Pneumatic vehicle tyre comprising a tread region having a belt and also side walls extending between the tread region and the bead regions, wherein at least two carcass plies are provided and wherein at least one buffering intermediate ply (10) is provided between at least two carcass plies (12, 14) in predeterminable zones and determines the mutual spacing between these carcass plies (12, 14), **characterized in that** the ends of the at least two carcass plies are guided around axially spaced apart bead cores and wherein the maximum thickness of intermediate ply (10) amounts to 2 mm or less.

2. A tyre in accordance with claim 1, **characterised in that** the buffering intermediate ply (10) extends over the tread region (24) into the tyre side wall (16) and in each case terminates before the bead cores (18).

3. A tyre in accordance with claim 2, **characterised in that** the buffering intermediate ply (10) in each case extends up to the region of the bead apexes (20) and in particular ends in the region of the radially outer ends of the bead apexes (20).

4. A tyre in accordance with one of the preceding claims, **characterised in that** mutually separated buffering intermediate plies (10) are provided in the side walls and in the tread region.

5. A tyre in accordance with claim 4, **characterised in that** the intermediate ply (10) provided in the tread region has a greater hardness than the intermediate plies provided in the side wall regions.

6. A tyre in accordance with claim 4 or 5, **characterised in that** the centrally arranged intermediate ply associated with the tread region extends approximately over 40 to 80 % and preferably over approximately 50 % of the width of the tread.

7. A tyre in accordance with at least one of the preceding claims, **characterised in that** the thickness of the intermediate ply (10) is approximately constant over its entire width and preferably amounts to less than 2 mm, in particular to about 0.4 to 0.8 mm.

8. A tyre in accordance with one of the preceding claims, **characterised in that** the thickness of the respective buffering intermediate plies (10) in each case reduces in the direction of their free ends.

9. A tyre in accordance with at least one of the preceding claims, **characterised in that** the intermediate ply (10) consists of rubber, or of a composite material, comprising rubber and textile material.

10. A tyre in accordance with one of the preceding claims, **characterised in that** the buffering intermediate ply (10) is manufactured from synthetic materials, in particular from nylon or Kevlar.

11. A tyre in accordance with at least one of the preceding claims, **characterised in that**, with a plurality of intermediate plies (10), the individual intermediate plies are of different design.

12. A tyre in accordance with at least one of the preceding claims, **characterised in that** the intermediate ply (10) is designed so that its modulus of elasticity lies between 5 and 15 Mpa and is preferably disposed in the range from about 6.7 to 11.5 Mpa.

13. A tyre in accordance with at least one of the preceding claims, **characterised in that** the intermediate ply (10) is designed so that its hardness lies between 50 and 80 Shore A and is preferably disposed in the range of about 59 to 71 Shore A.

14. A tyre in accordance with at least one of preceding claims, **characterised in that** the intermediate ply (10) is designed so that the tanδ lies between 0.1 and 0.2 and preferably between about 0.12 and 0.16.

15. A tyre in accordance with at least one of preceding claims, **characterised in that** a plurality of buffering intermediate plies (10) are provided which lie above one another and which preferably have the same width, but which can have different material characteristics.

16. A tyre in accordance with at least one of preceding claims, **characterised in that** the ends of the radially inner carcass ply which are turned around the bead core (18) contact the radially outer carcass ply (12) above the bead apex (20), and **in that** the intermediate ply (10) extends up to and into the bead apex region.

17. A tyre in accordance with at least one of preceding claims, **characterised in that**, with an at least three-ply carcass, a buffering intermediate ply is provided at least between the two radially outer carcass plies.

18. A tyre in accordance with one of the preceding claims, **characterised in that** the buffering intermediate ply is in each case applied onto the respective carcass ply in a preshaping step.

## Patentansprüche

1. Fahrzeugluftreifen, der einen Laufflächenbereich mit einem Gürtel, sowie sich zwischen dem Laufflächenbereich und den Wulstbereichen erstreckende Seitenwände umfasst, wobei zumindest zwei Karkassenlagen vorgesehen sind und wobei zumindest eine puffernde Zwischenlage (10) zwischen zumindest zwei Karkassenlagen (12, 14) in vorbestimmbaren Zonen vorgesehen ist und die gegenseitige Beabstandung zwischen diesen Karkassenlagen (12, 14) bestimmt, **dadurch gekennzeichnet, dass** die Enden der zumindest zwei Karkassenlagen um axial beabstandete Wulstkerne herumgeführt sind und wobei die maximale Dicke der Zwischenlage (10) 2 mm oder weniger beträgt.

2. Reifen gemäß Anspruch 1, **dadurch gekennzeichnet, dass** die puffernde Zwischenlage (10) sich über den Laufflächenbereich (24) in die Reifenseitenwand (16) erstreckt und jeweils vor den Wulstkernen (18) endet.

3. Reifen gemäß Anspruch 2, **dadurch gekennzeichnet, dass** die puffernde Zwischenlage (10) sich jeweils bis zu dem Bereich der Wulstkernreiter (20) erstreckt und insbesondere im Bereich der radial äußeren Enden der Wulstkernreiter (20) endet.

4. Reifen gemäß einem der vorhergehenden Ansprüche, **dadurch gekennzeichnet, dass** voneinander getrennte puffernde Zwischenlagen (10) in den Seitenwänden und im Laufflächenbereich vorgesehen sind.

5. Reifen gemäß Anspruch 4, **dadurch gekennzeichnet, dass** die im Laufflächenbereich vorgesehene Zwischenlage (10) eine größere Härte als die in den Seitenwandbereichen vorgesehenen Zwischenlagen aufweist.

6. Reifen gemäß Anspruch 4 oder 5, **dadurch gekennzeichnet, dass** die dem Laufflächenbereich zugeordnete, mittig angeordnete Zwischenlage sich über etwa 40 bis 80% und vorzugsweise über etwa 50% der Breite der Lauffläche erstreckt.

7. Reifen gemäß zumindest einem der vorhergehenden Ansprüche, **dadurch gekennzeichnet, dass** die Dicke der Zwischenlage (10) über deren gesamte Breite etwa konstant ist und bevorzugt weniger als 2 mm, insbesondere etwa 0,4 bis 0,8 mm, beträgt.

8. Reifen gemäß einem der vorhergehenden Ansprüche, **dadurch gekennzeichnet, dass** die Dicke der jeweiligen puffernden Zwischenlagen (10) jeweils in Richtung ihrer freien Enden abnimmt.

9. Reifen gemäß zumindest einem der vorhergehenden Ansprüche, **dadurch gekennzeichnet, dass** die Zwischenlage (10) aus Kautschuk oder aus einem Verbundmaterial, das Kautschuk und Textilmaterial umfasst, besteht.

10. Reifen gemäß einem der vorhergehenden Ansprüche, **dadurch gekennzeichnet, dass** die puffernde Zwischenlage (10) aus synthetischen Materialien, insbesondere aus Nylon oder Kevlar, hergestellt ist.

11. Reifen gemäß zumindest einem der vorhergehenden Ansprüche, **dadurch gekennzeichnet, dass**, bei einer Vielzahl von Zwischenlagen (10), die einzelnen Zwischenlagen unterschiedlich gestaltet sind.

12. Reifen gemäß zumindest einem der vorhergehenden Ansprüche, **dadurch gekennzeichnet, dass** die Zwischenlage (10) derart gestaltet ist, dass ihr Elastizitätsmodul zwischen 5 und 15 MPa liegt und bevorzugt im Bereich von etwa 6,7 bis 11,5 MPa gelegen ist.

13. Reifen gemäß zumindest einem der vorhergehenden Ansprüche, **dadurch gekennzeichnet, dass** die Zwischenlage (10) so gestaltet ist, dass ihre Härte zwischen 50 und 80 Shore A liegt und bevorzugt im Bereich von etwa 59 bis 71 Shore A gelegen ist.

14. Reifen gemäß zumindest einem der vorhergehenden Ansprüche, **dadurch gekennzeichnet, dass** die Zwischenlage (10) so gestaltet ist, dass der Tanδ zwischen 0,1 und 0,2 und vorzugsweise zwischen etwa 0,12 und 0,16 liegt.

15. Reifen gemäß zumindest einem der vorhergehenden Ansprüche, **dadurch gekennzeichnet, dass** mehrere puffernde Zwischenlagen (10) vorgesehen sind, die übereinander liegen und die vorzugsweise die gleiche Breite haben, jedoch unterschiedliche Materialeigenschaften haben können.

16. Reifen gemäß zumindest einem der vorhergehenden Ansprüche, **dadurch gekennzeichnet, dass** die um den Wulstkern (18) herumgeschlagenen Enden der radial inneren Karkassenlage mit der radial äußeren Karkassenlage (12) über dem Wulstkernreiter (20) in Kontakt kommen, und dass die Zwischenlage (10) sich bis in den Wulstkernreiterbereich erstreckt.

17. Reifen gemäß zumindest einem der vorhergehenden Ansprüche, **dadurch gekennzeichnet, dass**, bei einer zumindest dreilagigen Karkasse, eine puffernde Zwischenlage zumindest zwischen den zwei radial äußeren Karkassenlagen vorgesehen ist.

18. Reifen gemäß einem der vorhergehenden Ansprüche, **dadurch gekennzeichnet, dass** die puffernde Zwischenlage jeweils in einem Vorformschritt auf der jeweiligen Karkassenlage angebracht ist.

## Revendications

1. Bandage pneumatique pour véhicule comprenant une zone de bande de roulement possédant une ceinture ainsi que des flancs latéraux s'étendant entre la zone de bande de roulement et les zones de talons, dans lequel on prévoit au moins deux plis de carcasse et dans lequel on prévoit au moins un pli intermédiaire (10) faisant tampon entre au moins deux plis de carcasse (12, 14) dans des zones qui peuvent être prédéterminées, qui détermine l'écartement mutuel entre ces plis de carcasses (12, 14), **caractérisé en ce que** les extrémités desdits au moins deux plis de carcasse sont guidées autour de tringles de talons espacées les unes des autres en direction axiale, l'épaisseur maximale du pli intermédiaire (10) s'élevant à 2 mm ou moins.

2. Bandage pneumatique selon la revendication 1, **caractérisé en ce que** le pli intermédiaire (10) faisant tampon s'étend sur la zone de bande de roulement (24) jusque dans le flanc latéral (16) du bandage pneumatique et, en tout cas, se termine avant d'atteindre les tringles de talons (18).

3. Bandage pneumatique selon la revendication 2, **caractérisé en ce que** le pli intermédiaire (10) faisant tampon s'étend en tout cas jusqu'à la zone des bourrages sur tringles (20) et en particulier se termine dans la zone des extrémités externes en direction radiale des bourrages sur tringles (20).

4. Bandage pneumatique selon l'une quelconque des revendications précédentes, **caractérisé en ce qu'**on prévoit des plis intermédiaires (10) séparés les uns des autres faisant office de tampon, dans la zone des flancs latéraux et dans la zone de bande de roulement.

5. Bandage pneumatique selon la revendication 4, **caractérisé en ce que** le pli intermédiaire (10) prévu dans la zone de bande de roulement possède une dureté supérieure à celle des plis intermédiaires que l'on prévoit dans les zones de flancs latéraux.

6. Bandage pneumatique selon la revendication 4 ou 5, **caractérisé en ce que** le pli intermédiaire arrangé en position centrale, associé à la zone de bande de roulement s'étend sur une distance représentant approximativement de 40 à 80 %, de préférence sur une distance représentant approximativement 50 % de la largeur de la bande de roulement.

7. Bandage pneumatique selon au moins une des revendications précédentes, **caractérisé en ce que** l'épaisseur du pli intermédiaire (10) est approximativement constante sur toute la largeur et de préférence s'élève à moins de 2 mm, en particulier à une valeur d'environ 0,4 à 0,8 mm.

8. Bandage pneumatique selon l'une quelconque des revendications précédentes, **caractérisé en ce que** l'épaisseur des plis intermédiaires respectifs (10) faisant office de tampon se réduit en tout cas dans la direction de leurs extrémités libres.

9. Bandage pneumatique selon au moins une des revendications précédentes, **caractérisé en ce que** le pli intermédiaire (10) est constitué de caoutchouc ou d'un matériau composite comprenant du caoutchouc et une matière textile.

10. Bandage pneumatique selon une des revendications précédentes, **caractérisé en ce que** le pli intermédiaire (10) faisant office de tampon est fabriqué à partir de matières synthétiques, en particulier à partir de nylon ou à partir de kevlar.

11. Bandage pneumatique selon au moins une des revendications précédentes, **caractérisé en ce que**, dans le cas de plusieurs plis intermédiaires (10), le modèle des plis intermédiaires individuels est différent.

12. Bandage pneumatique selon au moins une des revendications précédentes, **caractérisé en ce que** le pli intermédiaire (10) est conçu de telle sorte que son module d'élasticité se situe entre 5 et 15 MPa et se situe de préférence dans la plage d'environ 6,7 à 11,5 MPa.

13. Bandage pneumatique selon au moins une des revendications précédentes, **caractérisé en ce que** le pli intermédiaire (10) est conçu de telle sorte que sa dureté se situe entre 50 et 80 Shore A et se situe de préférence dans la plage d'environ 59 à 71 Shore A.

14. Bandage pneumatique selon au moins une des revendications précédentes, **caractérisé en ce que** le pli intermédiaire 10 est conçu de telle sorte que sa valeur tan δ se situe entre 0,1 et 0,2, et de préférence entre environ 0,12 et 0,16.

15. Bandage pneumatique selon au moins une des revendications précédentes, **caractérisé en ce qu'**on prévoit plusieurs plis intermédiaires (10) faisant office de tampon qui viennent se disposer les uns pardessus les autres et qui possèdent de préférence la même largeur, mais qui peuvent posséder des caractéristiques matérielles différentes.

16. Bandage pneumatique selon au moins une des revendications précédentes, **caractérisé en ce que** les extrémités du pli de carcasse interne en direction radiale qui sont retournées autour de la tringle de talons (18) entrent en contact avec le pli de carcasse (12) externe en direction radiale au-dessus du bourrage sur tringles (20), et **en ce que** le pli intermédiaire (10) s'étend jusqu'à la zone de bourrage sur tringle et jusque dans cette dernière.

17. Bandage pneumatique selon au moins une des revendications précédentes, **caractérisé en ce que**, dans le cas d'une carcasse comportant au moins trois plis, on prévoit un pli intermédiaire faisant office de tampon au moins entre les deux plis de carcasse externes en direction radiale.

18. Bandage pneumatique selon une des revendications précédentes, **caractérisé en ce que** le pli intermédiaire faisant office de tampon est appliqué en tout cas sur le pli de carcasse respectif au cours d'une étape de préfaçonnement.
